# EUROPÄISCHE PATENTSCHRIFT

(11) **EP 4 040 945 B1**
(45) Veröffentlichungstag und Bekanntmachung des Hinweises auf die Patenterteilung: **10.09.2025**
(21) Anmeldenummer: 20807256.1
(22) Anmeldetag: 07.10.2020
(51) Int. Cl.: A01G 23/00

(54) **HOLZGREIFER**
LOG GRAB
DISPOSITIF DE PRÉHENSION DE BOIS

(30) Priorität: 07.10.2019 AT 11519 U
(43) Veröffentlichungstag der Anmeldung: 17.08.2022
(73) Patentinhaber: Zaglacher, Andreas, 6342 Niederndorf (AT)
(72) Erfinder: Zaglacher, Andreas, 6342 Niederndorf (AT)
(74) Vertreter: Schwan Schorer & Partner mbB
(86) Internationale Anmeldenummer: PCT/EP2020/077986
(87) Internationale Veröffentlichungsnummer: WO 2021/069435

(56) Entgegenhaltungen:
- WO-A1-03/008716
- US-A- 2 639 937
- US-A- 2 916 322
- US-A1- 2008 196 790

## Beschreibung

In der Forstwirtschaft sowie im weiteren Prozess der Holzverarbeitung werden Holzgreifer verschiedener Größen eingesetzt. Diese sind dadurch charakterisiert, dass die beiden Greifer (Pos. 1 und Pos.2) synchron zugreifen. Hierbei können die beiden Greifer-Zangen entweder ineinander greifen und sind hierbei aber in offener Konstruktionsweise ausgeführt. Oder sie haben ein geschlossenes Profil (Pos. 5) und schließen aufeinanderfolgend. Ein Holzgreifer gemäß dem Oberbegriff von Anspruch 1 ist aus der US 2,916,322 A bekannt

Die vorliegende Erfindung kombiniert nun diese beiden Möglichkeiten sowie die verschiedenen Vorteile der beiden Greifformen. Am erfundenen Greifer ist eine Greifzange (Pos. 5) mit einer entsprechend großen Öffnung (Pos. 6) versehen, welche es ermöglicht, dass der Einzelgreifer (Pos. 4) mit gleichem Rotationswinkel schließt wie der geschlossene Greifer. Hierzu fährt der Einzelgreifer (Pos. 4) in die Aussparung (Pos. 6) im Greifer (Pos. 5). Der Ausschnitt (Pos. 6) ist hierzu so ausgeführt, dass in jeder kinematisch zugelassenen Position der Einzelgreifer (Pos. 4) in diesen Ausschnitt (Pos. 6) hindurchpasst.

Die vorliegende Erfindung wird in der Forstwirtschaft sowie beim Umschlag von Holz bzw. Rundmaterial verwendet.

An Verbindungseinheit (Pos. 3) kann an der Oberseite (Pos. 7) an gängige Maschinen der Holzverarbeitenden Industrie angeschlossen werden.

### Bildbeschreibung

- 1.: Greiferzange an einem Holzgreifer
- 2.: Greiferzange an einem Holzgreifer
- 3.: Verbindungselement der beiden Greiferzangen und Anschluß an weitere Maschinen
- 4.: Einzelgreifer, massiv und/oder als Hohlprofil ausgeführt
- 5.: Geschlossene Greiferzange
- 6.: Ausschnitt der geschlossenen Greiferzange, sodass der Einzelgreifer (Pos. 4) in jeder kinematischen Stellung hindurchpasst.
- 7.: Anschluß an weitere Maschinen
- 8.: Überlappung der beiden Greifer Pos. 1 und Pos. 2
- 9.: geklemmter Baum bzw. Langgut

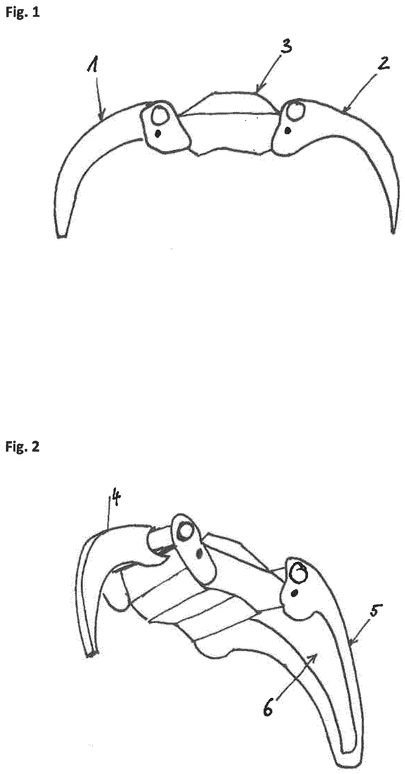

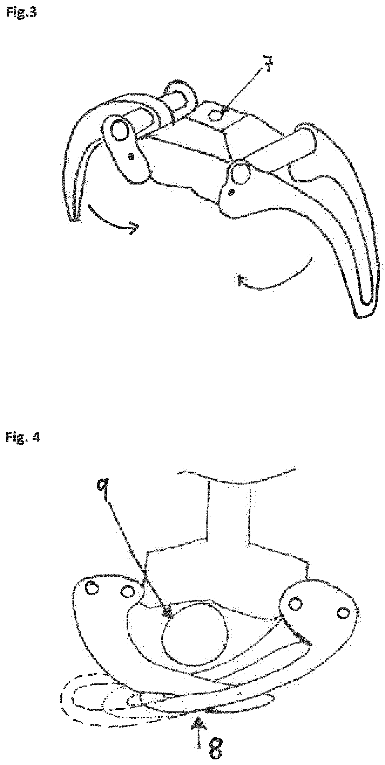

## Patentansprüche

1. Holzgreifer zum Greifen und Heben von Bäumen und Langgüter mit jeweils einem einzelnen Greifer (4) und einem geschlitzten Greifer (5), welche ineinandergreifen,
wobei der einzelne Greifer (4) als konischer Schnabel ausgeformt ist,
**dadurch gekennzeichnet, dass**:
der geschlitzte Greifer (5) zwei Schenkel aufweist, die an ihren dem ersten Greifer (4) zugeordneten Ende miteinander verbunden sind und eine Aussparung (6) umfassen,
in welchen der einzelne Greifer (4) bis zu einem vollständigen Schließen des Holzgreifers eingreifen kann, und
die Aussparung (6) des geschlitzten Greifers (5) konisch ausgebildet ist und einen Winkel von mehr als 5° ausweist.

2. Holzgreifer nach Anspruch 1, **dadurch gekennzeichnet, dass** die Aussparung (6) im geschlitzten Greifer (5) so bemessen ist, dass der einzelne Greifer (4) beim Schließen des Holzgreifers in diese einfahren kann.

3. Holzgreifer nach Anspruch 1, **dadurch gekennzeichnet, dass** der einzelne Greifer (4) als Hohlprofil oder als Vollmaterial ausgeführt ist.

4. Holzgreifer nach Anspruch 1, **dadurch gekennzeichnet, dass** die Aussparung (6) so ausgeführt ist, dass in jeder kinematisch zugelassenen Position der einzelne Greifer (4) durch diese Aussparung (6) hindurchgreifen kann.

5. Holzgreifer nach Anspruch 4, **dadurch gekennzeichnet, dass** die Schenkel einen sich zu ihren Enden hin verjüngenden Querschnitt aufweisen.

6. Holzgreifer nach einem der vorhergehenden Ansprüche, **dadurch gekennzeichnet, dass** beide Greifer (4, 5) an einem Mittelteil verschwenkbar angeordnet sind.

## Claims

1. Timber grapple for gripping and lifting trees and long articles with a single gripper (4) and a slotted gripper (5) in each case, which grippers engage one into the other, wherein the single gripper (4) has the shape of a conical beak,
**characterized in that**:
the slotted gripper (5) has two limbs which are connected to one another at their end assigned to the first gripper (4) and include a cutout (6) into which the single gripper (4) can engage until the timber grapple is fully closed, and
the cutout (6) of the slotted gripper (5) is conical and has an angle of greater than 5°.

2. Timber grapple according to Claim 1, **characterized in that** the cutout (6) in the slotted gripper (5) is dimensioned such that the single gripper (4) can move into it during closure of the timber grapple.

3. Timber grapple according to Claim 1, **characterized in that** the single gripper (4) has a hollow-profile or solid-material design.

4. Timber grapple according to Claim 1, **characterized in that** the cutout (6) is formed in such a way that, in each kinematically permissible position, the single gripper (4) can pass through said cutout (6).

5. Timber grapple according to Claim 4, **characterized in that** the limbs have a cross section which narrows towards their ends.

6. Timber grapple according to one of the preceding claims, **characterized in that** both grippers (4, 5) are arranged in a pivotable manner on a middle part.

## Revendications

1. Dispositif de préhension de bois destiné à saisir et à soulever des troncs et des produits longs avec respectivement un dispositif de préhension individuel (4) et un dispositif de préhension fendu (5), lesquels s'imbriquent, le dispositif de préhension individuel (4) étant formé comme un bec conique,
**caractérisé en ce que** :
le dispositif de préhension fendu (5) comporte deux branches, qui sont reliées l'une à l'autre sur leur extrémité associée au premier dispositif de préhension (4) et comprennent un évidement (6), avec lequel le dispositif de préhension individuel (4) peut venir en prise jusqu'à une fermeture totale du dispositif de préhension de bois, et
l'évidement (6) du dispositif de préhension fendu (5) est réalisé de manière conique et présente un angle supérieur à 5°.

2. Dispositif de préhension de bois selon la revendication 1, **caractérisé en ce que** l'évidement (6) dans le dispositif de préhension fendu (5) est dimensionné de telle sorte que le dispositif de préhension individuel (4) peut, lors de la fermeture du dispositif de préhension de bois, rentrer dans ledit évidement.

3. Dispositif de préhension de bois selon la revendication 1, **caractérisé en ce que** le dispositif de préhension individuel (4) est formé comme un profil creux ou comme un matériau massif.

4. Dispositif de préhension de bois selon la revendication 1, **caractérisé en ce que** l'évidement (6) est réalisé de telle sorte que le dispositif de préhension individuel (4) peut venir en prise à travers ledit évidement (6) dans toute position autorisée sur le plan cinématique.

5. Dispositif de préhension de bois selon la revendication 4, **caractérisé en ce que** les branches comportent une section transversale se rétrécissant en direction de leurs extrémités.

6. Dispositif de préhension de bois selon l'une des revendications précédentes, **caractérisé en ce que** les deux dispositifs de préhension (4, 5) sont disposés de manière à pouvoir pivoter sur une partie centrale.
